# EUROPEAN PATENT APPLICATION

(11) **EP 4 501 121 A1**
(43) Date of publication of application: **05.02.2025**
(21) Application number: 23779264.3
(22) Date of filing: 06.03.2023
(51) Int. Cl.: A23D 9/00, A23J 3/14, A23L 13/00, A23L 13/40, A23L 13/60, A23L 29/00, A23L 35/00

(54) **OIL-AND-FAT TO BE KNEADED INTO PROCESSED FOOD**

(30) Priority: 31.03.2022 JP 2022060006
(71) Applicant: Fuji Oil Holdings Inc., Izumisano-shi, Osaka 598-8540 (JP)
(72) Inventor: ONUMA, Ryo, Tsukubamirai-shi, Ibaraki 300-2436 (JP)
(74) Representative: Dennemeyer & Associates S.A.
(86) International application number: PCT/JP2023/008279
(87) International publication number: WO 2023/189235

(57) **Abstract**

An object of the present invention is to provide a processed food containing livestock meat and/or a vegetable protein materials which provides juiciness even immediately after heating and also provides juiciness even after heating and leaving to cool, that is, the processed food in which a flavor is maintained. Another object of the present invention is to provide a processed food having excellent workability in production of the processed food. Further another object of the present invention is to provide a pure vegetable oil-and-fat that satisfies both of these requirements. It has been found that when an oil-and-fat to be kneaded into a processed food that exhibits a specific solid fat content and is pure vegetable is used for a processed food containing livestock meat and/or a vegetable protein material, it is possible to simply prepare a processed food containing livestock meat and/or a vegetable protein material which satisfies both excellent workability and maintenance of juiciness immediately after heating and after heating and leaving to cool.

## Description

### TECHNICAL FIELD

The present invention relates to an oil-and-fat to be kneaded into a processed food.

### BACKGROUND ART

In recent years, efforts to achieve sustainable development goals (SDGs) have progressed worldwide. In particular, a shortage of food resources, particularly animal food resources, is predicted due to global population growth, and interest in vegetable food resources is increasing. As vegetable food resources, vegetables such as soybean, peas, and green beans are widely used for a processed food and the like for the purpose of substituting livestock meat.

A livestock meat or livestock-meat-like processed food in which a part or all of livestock meat is replaced with vegetable protein is often commercialized as chilled foods or frozen foods. When a processed food containing livestock meat is eaten, meat juice is felt. On the other hand, since a processed food containing livestock meat is heated a plurality of times in processing and cooking processes, meat juice may be lost. In addition, in a livestock-meat-like processed food, no or a small amount of livestock meat is used, so that meat juice may be hardly felt.

With the improvement of production techniques in recent years, for example, a processed food that does not need to be heated when put in a lunch box or the like, or a product that can be deliciously eaten without being reheated when eaten has been developed. With such productization, opportunities for use by consumers are expanded in that the above-described problems can be solved while saving cooking. However, there still remains a problem that juiciness is not felt when the product is eaten in a cooled state. It is desired to develop a juicy livestock meat or livestock-meat-like processed food that can cope with all food scenes.

For example, Patent Literature 1 discloses an oil-and-fat composition containing an edible oil-and-fat, a polyglycerin-condensed ricinoleic acid ester, and a polyglycerin fatty acid ester at a specific mass ratio, as a method for meat juice, juiciness, and the like to be felt not only immediately after the product is heated but also even after cooled. It is described that the use of this oil-and-fat composition makes it possible to provide a minced meat processed frozen food that has strong juiciness, has a transparent meat juice, and maintains juiciness even when cooled. Further, Patent Literature 2 discloses that an oil-and-fat composition having a specific solid fat content is used for a heat-cooked food, as a method for maintaining the fresh-made taste and texture of a heat-cooked food.

Further, Patent Literature 3 discloses use of an oil-and-fat composition for a processed food which is in the form of small pieces having a specific size and has a specific solid fat content, for providing meat juice and juiciness. In addition, Patent Literature 4 discloses use of an oil-and-fat composition containing protein and/or sodium starch octenylsuccinate and an oil-and-fat, and Patent Literature 5 discloses use of an oil-and-fat composition for a livestock meat heated food which includes an oil-and-fat, organic acid monoglyceride, and glutinous rice starch and/or phosphate crosslinked starch.

### CITATION LIST

### PATENT LITERATURE

Patent Literature 1: JP-A-2020-141645
Patent Literature 2: JP-A-2014-198032
Patent Literature 3: WO 2020/004058 A
Patent Literature 4: JP-A-2021-69332
Patent Literature 5: JP-A-2019-83790

### SUMMARY OF INVENTION

### PROBLEMS TO BE SOLVED BY INVENTION

Patent Literature 1 and Patent Literature 2 describe that a certain effect is obtained in maintaining juiciness in a cooled state after heating. However, in Patent Literature 1, it is necessary to prepare a water-in-oil emulsion having a stable emulsified state. Further, in Patent Literature 2, it is necessary to use a specific oil-and-fat having an appropriate crystal amount in a temperature range of 10°C to 30°C, and both lack versatility.

In Patent Literature 3 and Patent Literature 4, it is necessary to process the oil-and-fat composition into a small piece shape or a granular shape, and workability is complicated. When the oil-and-fat composition of Patent Literature 5 is used, the texture may be slightly pasty, and there remains a problem in providing juiciness. In addition, juiciness in a state where the processed food is cooled after heating and leaving to cool is not studied, and it is unclear whether the effects of the respective inventions can be obtained.

Furthermore, Patent Literature 2 and Patent Literature 4 describe that there is a problem in terms of operation that when an oil-and-fat having a solid fat content that is less than or equal to the specific range is blended in a livestock meat or livestock-meat-like processed food, the viscosity of the dough decreases so that moldability deteriorates. In particular, it has been reported that when liquid oil is blended, the dough is sticky and is soft and difficult to mold (Patent Literature 4). Therefore, it is necessary to use an oil-and-fat suitable for a livestock meat or livestock-meat-like processed food.

In addition, in a livestock-meat-like processed food typified by a plant based food (PBF), there is also a problem to be solved in addition to flavor. For example, it is necessary to simultaneously solve health problems caused by trans fatty acids, environmental problems such as animal fat substitution, and social problems.

Therefore, an object of the present invention is to provide a processed food containing livestock meat and/or a vegetable protein material which provides juiciness even immediately after heating and also provides juiciness even after heating and leaving to cool, that is, in which a flavor is maintained. Another object of the present invention is to provide a processed food having excellent workability in production of the processed food. Further another object of the present invention is to provide a pure vegetable oil-and-fat that satisfies both of these requirements.

### SOLUTION TO PROBLEMS

As a result of further studies by the present inventor, the present inventor has found that when an oil-and-fat to be kneaded into a processed food that exhibits a specific solid fat content and is pure vegetable is used for a processed food containing livestock meat and/or a vegetable protein material, it is possible to simply prepare a processed food containing livestock meat and/or a vegetable protein material which satisfies both excellent workability and maintenance of juiciness immediately after heating and after heating and leaving to cool, and have completed the present invention.

That is, the present invention is as follows.
(1) An oil-and-fat to be kneaded into a processed food satisfying all of requirements (A) to (D) below:
   (A) a solid fat content (SFC) at 10°C is 10% or more;
   (B) an SFC when held at 20°C for 30 minutes is 10% or less;
   (C) a ratio of a saturated fatty acid content/an unsaturated fatty acid content in constituent fatty acids is 0.1 to 19; and
   (D) the oil-and-fat is a pure vegetable oil-and-fat.
(2) The oil-and-fat to be kneaded into a processed food according to (1), in which a saturated fatty acid content in constituent fatty acids of the oil-and-fat to be kneaded into a processed food is 20 to 95 mass%.
(3) The oil-and-fat to be kneaded into a processed food according to (1) or (2), in which a total amount of unsaturated fatty acids in constituent fatty acids of the oil-and-fat to be kneaded into a processed food is 5 to 85 mass%.
(4) The oil-and-fat to be kneaded into a processed food according to (1) or (2), in which a total amount of lauric acid, myristic acid, palmitic acid, and stearic acid in constituent fatty acids of the oil-and-fat to be kneaded into a processed food is 20 to 90 mass%.
(5) The oil-and-fat to be kneaded into a processed food according to (1) or (2), in which a total amount of palmitic acid and stearic acid in constituent fatty acids of the oil-and-fat to be kneaded into a processed food is 15 to 65 mass%.
(6) The oil-and-fat to be kneaded into a processed food according to (5), in which a total amount of palmitic acid and stearic acid in constituent fatty acids of the oil-and-fat to be kneaded into a processed food is 40 to 60 mass%.
(7) The oil-and-fat to be kneaded into a processed food according to (1) or (2), in which an iodine value (IV) of the oil-and-fat to be kneaded into a processed food is 30 to 100.
(8) The oil-and-fat to be kneaded into a processed food according to (7), in which an iodine value (IV) of the oil-and-fat to be kneaded into a processed food is 33 to 60.
(9) The oil-and-fat to be kneaded into a processed food according to (1) or (2), in which the oil-and-fat to be kneaded into a processed food contains one or more oils-and-fats selected from the group of palm oil and processed oils-and-fats obtained by fractionating, hydrogenating, or transesterifying palm oil.
(10) The oil-and-fat to be kneaded into a processed food according to (6), in which the oil-and-fat to be kneaded into a processed food contains palm olein obtained by fractionating palm oil or palm medium-melting-point oil having an IV of 30 to 55 obtained by fractionating palm olein.
(11) The oil-and-fat to be kneaded into a processed food according to (8), in which the oil-and-fat to be kneaded into a processed food contains palm olein obtained by fractionating palm oil or palm medium-melting-point oil having an IV of 30 to 55 obtained by fractionating palm olein.
(12) The oil-and-fat to be kneaded into a processed food according to (9), in which the oil-and-fat to be kneaded into a processed food contains palm olein obtained by fractionating palm oil or palm medium-melting-point oil having an IV of 30 to 55 obtained by fractionating palm olein.
(13) A processed food including: the oil-and-fat to be kneaded into a processed food according to (1); and livestock meat and/or a vegetable protein material, in which a flavor of the processed food is maintained.
(14) A processed food including: the oil-and-fat to be kneaded into a processed food according to (4); and livestock meat and/or a vegetable protein material, in which a flavor of the processed food is maintained.
(15) A processed food including: the oil-and-fat to be kneaded into a processed food according to (5); and livestock meat and/or a vegetable protein material, in which a flavor of the processed food is maintained.
(16) A processed food including: the oil-and-fat to be kneaded into a processed food according to (7); and livestock meat and/or a vegetable protein material, in which a flavor of the processed food is maintained.
(17) A processed food including: the oil-and-fat to be kneaded into a processed food according to (9); and livestock meat and/or a vegetable protein material, in which a flavor of the processed food is maintained.
(18) A method for producing a processed food, the method including: a dough preparation step of mixing the oil-and-fat to be kneaded into a processed food according to (1) with livestock meat and/or a vegetable protein material; a molding step of molding the mixture after mixing; and a heating step of heating the mixture after molding.
(19) A method for producing a processed food, the method including: a dough preparation step of mixing the oil-and-fat to be kneaded into a processed food according to (5) with livestock meat and/or a vegetable protein material; a molding step of molding the mixture after mixing; and a heating step of heating the mixture after molding.
(20) A method for producing a processed food, the method including: a dough preparation step of mixing the oil-and-fat to be kneaded into a processed food according to (9) with livestock meat and/or a vegetable protein material; a molding step of molding the mixture after mixing; and a heating step of heating the mixture after molding.
(21) A method for maintaining a flavor of a processed food containing livestock meat and/or a vegetable protein material, in which the oil-and-fat to be kneaded into a processed food according to (1) is contained.
(22) A method for maintaining a flavor of a processed food containing livestock meat and/or a vegetable protein material, in which the oil-and-fat to be kneaded into a processed food according to (5) is contained.
(23) A method for maintaining a flavor of a processed food containing livestock meat and/or a vegetable protein material, in which the oil-and-fat to be kneaded into a processed food according to (9) is contained.
(24) A flavor maintaining agent for a processed food, in which the oil-and-fat to be kneaded into a processed food according to (1) maintains a flavor of a processed food containing livestock meat and/or a vegetable protein material.
(25) A flavor maintaining agent for a processed food, in which the oil-and-fat to be kneaded into a processed food according to (4) maintains a flavor of a processed food containing livestock meat and/or a vegetable protein material.
(26) A flavor maintaining agent for a processed food, in which the oil-and-fat to be kneaded into a processed food according to (5) maintains a flavor of a processed food containing livestock meat and/or a vegetable protein material.
(27) A flavor maintaining agent for a processed food, in which the oil-and-fat to be kneaded into a processed food according to (7) maintains a flavor of a processed food containing livestock meat and/or a vegetable protein material.
(28) A flavor maintaining agent for a processed food, in which the oil-and-fat to be kneaded into a processed food according to (9) maintains a flavor of a processed food containing livestock meat and/or a vegetable protein material.

Further, the present invention is as follows.
(31) An oil-and-fat to be kneaded into a processed food that satisfies all of requirements (A) to (C) below and maintains a flavor of a processed food:
   (A) a solid fat content (SFC) at 10°C is 10% or more;
   (B) an SFC when held at 20°C for 30 minutes is 10% or less; and
   (C) the oil-and-fat is a pure vegetable oil-and-fat.
(32) The oil-and-fat to be kneaded into a processed food according to (31), in which a saturated fatty acid content in constituent fatty acids of the oil-and-fat to be kneaded into a processed food is 20 to 95 mass%.
(33) The oil-and-fat to be kneaded into a processed food according to (31) or (32), in which a total amount of unsaturated fatty acids in constituent fatty acids of the oil-and-fat to be kneaded into a processed food is 5 to 85 mass%.
(34) The oil-and-fat to be kneaded into a processed food according to any one of (31) to (33), in which a total amount of lauric acid, myristic acid, palmitic acid, and stearic acid in constituent fatty acids of the oil-and-fat to be kneaded into a processed food is 20 to 90 mass%.
(35) The oil-and-fat to be kneaded into a processed food according to any one of (31) to (34), in which a total amount of palmitic acid and stearic acid in constituent fatty acids of the oil-and-fat to be kneaded into a processed food is 15 to 65 mass%.
(36) A processed food that includes the oil-and-fat to be kneaded into a processed food according to any one of (31) to (35) and livestock meat and/or vegetable protein material, in which a flavor of the processed food is maintained.
(37) A method for producing a processed food in which a flavor is maintained, the method including: a dough preparation step of mixing the oil-and-fat to be kneaded into a processed food according to any one of (31) to (35) with livestock meat and/or a vegetable protein material; a molding step of molding the mixture after mixing; and a heating step of heating the mixture after molding.
(38) A method for maintaining a flavor of a processed food containing livestock meat and/or a vegetable protein material, in which the oil-and-fat to be kneaded into a processed food according to any one of (31) to (35) is contained.
(39) A flavor maintaining agent for a processed food, in which the oil-and-fat to be kneaded into a processed food according to any one of (31) to (35) maintains a flavor of a processed food containing livestock meat and/or a vegetable protein material.

### EFFECTS OF INVENTION

According to the present invention, workability can be improved in the production of a processed food containing livestock meat and/or a vegetable protein material by using the oil-and-fat to be kneaded into a processed food of the present invention for the processed food. Further, it is possible to provide a processed food having juiciness immediately after heating and after heating and leaving to cool. The use of the oil-and-fat to be kneaded into a processed food of the present invention can be one of the solutions to problems of flavor, social problems, and the like which are problems in development of PBF foods.

### DESCRIPTION OF EMBODIMENTS

Hereinafter, the present invention will be specifically described.

The present invention relates to an oil-and-fat to be kneaded into a processed food satisfying all of requirements (A) to (D) below. Specifically, a processed food which is excellent in workability and in which juiciness can be maintained immediately after heating and after heating and leaving to cool can be obtained by blending an oil-and-fat to be kneaded into a processed food satisfying all of requirements (A) to (D) below to a processed food containing livestock meat and/or a vegetable protein material.
(A) A solid fat content (SFC) at 10°C is 10% or more.
(B) An SFC when held at 20°C for 30 minutes is 10% or less.
(C) A ratio of a saturated fatty acid content/an unsaturated fatty acid content in constituent fatty acids is 0.1 to 19.
(D) The oil-and-fat is a pure vegetable oil-and-fat.

### (Processed food)

The processed food according to the present invention refers to a processed food containing livestock meat and/or a vegetable protein material. Specifically, it refers to one in which livestock meat is mixed (livestock meat processed food), one in which livestock meat and a vegetable protein material are mixed, and one in which only a vegetable protein material is mixed without containing livestock meat, and the latter two are described as a livestock-meat-like processed food. In particular, a livestock-meat-like processed food in which only a vegetable protein material is blended without containing livestock meat is referred to as a meatless food.

The livestock meat according to the present invention can be one or a combination of two or more of meats from birds and animals such as cattle, pigs, chickens, horses, sheep, deer, boars, turkeys, ducks, ostriches, and whales. Here, the birds and animals may be land animals or aquatic animals, but land animals are preferable. The section of meat that is a model of a processed food including livestock meat is not particularly limited. The use amounts of the livestock meat and the vegetable protein material only have to be appropriately determined according to the quality and concept required of the product.

As the vegetable protein material according to the present invention, a material suitable for the product form of a processed food, such as granular vegetable protein, powdery vegetable protein, and emulsion curd, can be appropriately used.

The granular vegetable protein that can be used as the vegetable protein material according to the present invention is obtained by blending a vegetable raw material exemplified by soybean, soybean protein, wheat, wheat protein, pea, or pea protein, and organizing the raw materials under high temperature and high pressure using a uniaxial or twin-screw extrusion molder (extruder), and has a granular shape, a flake shape, a sliced meat shape, or the like. Granular soybean protein containing soybean as a main raw material is suitable for the present invention. A product having an optional shape and size can be appropriately selected and used according to a desired product form and concept.

The powdery vegetable protein that can be used as the vegetable protein material according to the present invention is obtained by powdering a vegetable raw material exemplified by soybean, wheat, pea, or the like, and contains 50 mass% or more of protein per solid content after degreasing. Powdery soybean protein containing soybean as a main raw material is suitable for the present invention. A commercially available powdery vegetable protein can be appropriately selected and used. A powdery vegetable protein obtained by adding an oil-and-fat in advance and powderizing the mixture in order to enhance dispersibility in a dough can also be used. Emulsion curd including powdery vegetable protein can also be used as the vegetable protein material. The emulsion curd as described herein refers to an emulsion containing powdery vegetable protein, water, and an oil-and-fat and homogenized. In this case, powdery soybean protein is similarly suitable.

Specific examples of the processed food according to the present invention include hamburg steak, patties, meatballs, nuggets, chicken meatballs, ham, salami, sausage, dumplings, shumai, meat buns, soup dumplings, minced meat cutlets, croquettes, frankfurters, corn dogs, meat pie, ravioli, lasagna, meat loaf, stuffed cabbage, bell pepper or lotus root stuffed with meat, and various other processed foods using minced meat.

The flavor according to the present invention refers to juiciness, and is obtained by feeling in the mouth the savoriness of meat juice or an oil-and-fat flowing out of the processed food at the time of eating. The maintenance of the flavor according to the present invention refers to a state in which there is juiciness even when eaten immediately after heating by cooking, and there is juiciness equivalent to that immediately after heating even in a cooled state after heating and leaving to cool. That is, it is a state in which juiciness is maintained. The heating as described herein refers to a cooking process in which a consumer, a retailer, or a restaurant business operator adds heat such as a microwave oven, an oven, stewing, frying, baking, or steaming after the produced processed food was distributed.

In the oil-and-fat to be kneaded into a processed food of the present invention, (A) a solid fat content (SFC) at 10°C is 10% or more. More preferably, the lower limit is 12% or more, 15% or more, 30% or more, or 50% or more. More preferably, the upper limit is 95% or less, 90% or less, 85% or less, 80% or less, or 75% or less. Usually, a processed food containing livestock meat and/or a vegetable protein material is often produced under an environment of 10°C or lower from the viewpoint of hygiene. When this range is appropriate, a dough is less likely to be softened, can be molded, and has excellent workability under the environment of the production process, even when the oil-and-fat is blended in the processed food and kneaded. In addition, when the oil-and-fat satisfies this range, it can be chopped into small pieces. By kneading the oil-and-fat in the form of small pieces into a dough, the oil-and-fat can be uniformly dispersed in the processed food. On the other hand, when the SFC at 10°C is less than 10%, the oil-and-fat has low viscosity because the oil-and-fat is liquid, and it may be difficult to knead the oil-and-fat into the processed food. Alternatively, when the oil-and-fat is blended into the processed food, the dough becomes soft, and moldability may be poor. Furthermore, the oil-and-fat cannot be chopped into small pieces, and it may be difficult to knead the oil-and-fat into the dough. These also affect juiciness, and it may be difficult to obtain juiciness. The measurement method of an SFC is an abbreviation of Solid Fat Content, and conforms to the method of IUPAC. 2 150(a) Solid Content Determination In Fats By NMR.

In the oil-and-fat to be kneaded into a processed food of the present invention, (B) an SFC when held at 20°C for 30 minutes is 10% or less. More preferably, the SFC is 9.5% or less, 9% or less, 6% or less, 5% or less, or 3% or less. When the oil-and-fat in this range is used in the processed food containing livestock meat and/or a vegetable protein material, the oil-and-fat melts and flows out immediately after heating, and juiciness is obtained. In addition, the oil-and-fat has a characteristic that it is unlikely to solidify even after heating and leaving to cool. As a result, it is possible to maintain a state in which the oil-and-fat is melted even after heating and leaving to cool, the oil-and-fat sufficiently flows out not only immediately after heating but also after heating and leaving to cool, and maintenance of juiciness is achieved. On the other hand, when an oil-and-fat having an SFC of more than 10% when held at 20°C for 30 minutes is used for the processed food, juiciness is obtained immediately after heating. However, when the processed food is cooled, the oil-and-fat is likely to solidify. Therefore, when the processed food is eaten after left to cool, the oil-and-fat may not flow out, and juiciness may not be felt.

Note that the term "after heating and leaving to cool" as described herein refers to a state after leaving for a certain period of time at room temperature without intentional heating or cooling after heating by cooking. The "SFC when held at 20°C for 30 minutes" as described herein refers to a so-called solidification rate, and can be obtained by the following method. That is, in a measurement method of placing in an environment of 20°C and measuring the SFC every 10 minutes, it is obtained by measuring the SFC 30 minutes after the start of cooling. The method for measuring the SFC is the same as the method described above.

In the oil-and-fat to be kneaded into a processed food of the present invention, (C) a ratio of a saturated fatty acid content/an unsaturated fatty acid content in constituent fatty acids is 0.1 to 19. More preferably, the upper limit is 15 or less, 12 or less, 10 or less, 5 or less, 4 or less, 3 or less, 2 or less, 1.75 or less, 1.6 or less, or 1.5 or less. More preferably, the lower limit is 0.2 or more, 0.3 or more, 0.4 or more, 0.5 or more, 0.7 or more, or 1 or more. When the oil-and-fat in this range is used in the processed food containing livestock meat and/or a vegetable protein material, the oil-and-fat melts and flows out immediately after heating, and juiciness is obtained. In addition, the oil-and-fat has a characteristic that it is unlikely to solidify even after heating and leaving to cool. As a result, it is possible to maintain a state in which the oil-and-fat is melted even after heating and leaving to cool, the oil-and-fat sufficiently flows out not only immediately after heating but also after heating and leaving to cool, and maintenance of juiciness is achieved. In addition, by using the oil-and-fat within this range, molding can be performed without problems.

In the oil-and-fat to be kneaded into a processed food of the present invention, (D) the kneaded oil-and-fat is a pure vegetable oil-and-fat. The usable oil-and-fat is not particularly limited as long as it satisfies the above-described configuration and is a vegetable-derived oil-and-fat. Specifically, vegetable fats-and-oils such as palm oil, palm kernel oil, coconut oil, rapeseed oil, soybean oil, cottonseed oil, corn oil, sunflower oil, high oleic sunflower oil, olive oil, safflower oil, rice oil, sesame oil, sal fat, cacao fat, shea fat, iripe fat, allanbrachia fat, high stearic acid/high oleic acid sunflower oil, and transesterified oil used for production of cocoa butter alternative fat and fractionated oil thereof, as well as fractionated oil, hardened oil, transesterified oil, and the like thereof are appropriately selected according to purposes, and one or a combination of two or more thereof can be used. If the above-described configuration is satisfied, the oil-and-fat can also be prepared by mixing two or more oils-and-fats having different SFCs and fatty acid compositions. Examples thereof include a mixed oil of rapeseed oil and palm medium-melting-point oil.

As a preferred aspect of the oil-and-fat to be kneaded into a processed food of the present invention, the saturated fatty acid content in the constituent fatty acids of the oil-and-fat is preferably 20 to 95 mass%. More preferably, the upper limit is 93 mass% or less, 90 mass% or less, 85 mass% or less, 80 mass% or less, 75 mass% or less, 70 mass% or less, 65 mass% or less, or 60 mass% or less. More preferably, the lower limit is 25 mass% or more, 30 mass% or more, 35 mass% or more, 38 mass% or more, 40 mass% or more, 45 mass% or more, 48 mass% or more, 50 mass% or more, or 52 mass% or more. By adjusting the oil-and-fat to this range, the effect of maintaining juiciness can be further enhanced.

As another preferred aspect of the oil-and-fat to be kneaded into a processed food of the present invention, the total amount of unsaturated fatty acids in the constituent fatty acids of the oil-and-fat is preferably 5 to 85 mass%. More preferably, the upper limit is 80 mass% or less, 75 mass% or less, 70 mass% or less, 65 mass% or less, 60 mass% or less, or 55 mass% or less. More preferably, the lower limit is 8 mass% or more, 10 mass% or more, 15 mass% or more, 20 mass% or more, 25 mass% or more, 30 mass% or more, 35 mass% or more, 37 mass% or more, 38 mass% or more, or 40 mass% or more. By adjusting the oil-and-fat to this range, workability can be further enhanced. On the other hand, when this range exceeds 85 mass%, the oil-and-fat becomes liquid, and when the oil-and-fat is kneaded into the processed food, the viscosity of the dough is low, and moldability may be deteriorated.

As another preferred aspect of the oil-and-fat to be kneaded into a processed food of the present invention, the total amount of lauric acid, myristic acid, palmitic acid, and stearic acid in the constituent fatty acids of the oil-and-fat is preferably 20 to 90 mass%. More preferably, the upper limit is 85 mass% or less, 80 mass% or less, 75 mass% or less, 70 mass% or less, 65 mass% or less, 63 mass% or less, 60 mass% or less, or 58 mass% or less. More preferably, the lower limit is 25 mass% or more, 30 mass% or more, 35 mass% or more, 40 mass% or more, or 44 mass% or more. By adjusting the oil-and-fat to this range, the effect of maintaining juiciness can be further enhanced.

As another preferred aspect of the oil-and-fat to be kneaded into a processed food of the present invention, the total amount of lauric acid, palmitic acid, and stearic acid in the constituent fatty acids of the oil-and-fat is preferably 20 to 70 mass%. More preferably, the upper limit is 68 mass% or less, 65 mass% or less, 63 mass% or less, 60 mass% or less, or 58 mass% or less. More preferably, the lower limit is 25 mass% or more, 30 mass% or more, 35 mass% or more, 40 mass% or more, 42 mass% or more, 45 mass% or more, or 50 mass% or more. By adjusting the oil-and-fat to this range, the effect of maintaining juiciness can be further enhanced.

As another preferred aspect of the oil-and-fat to be kneaded into a processed food of the present invention, the total amount of palmitic acid and stearic acid in the constituent fatty acids of the oil-and-fat is preferably 15 to 65 mass%. More preferably, the upper limit is 60 mass% or less, 58 mass% or less, or 55 mass% or less. More preferably, the lower limit is 20 mass% or more, 25 mass% or less, 30 mass% or more, 35 mass% or more, 40 mass% or more, 45 mass% or more, or 48 mass% or more. By adjusting the oil-and-fat to this range, the effect of maintaining juiciness can be further enhanced. On the other hand, when this range exceeds 65 mass%, juiciness is felt when the processed food is eaten immediately after heating, but juiciness may not be obtained when the processed food is eaten after cooling because the oil-and-fat is easily solidified during heating and leaving to cool. Alternatively, the oil-and-fat partially remains in a solid state even immediately after heating, and juiciness may not be obtained.

As another preferred aspect of the oil-and-fat to be kneaded into a processed food of the present invention, an oil-and-fat having an IV of 30 to 100 is preferable. More preferably, the upper limit is 90 or less, 85 or less, 80 or less, 70 or less, 65 or less, 60 or less, or 57 or less. More preferably, the lower limit is 33 or more, 34 or more, 38 or more, or 42 or more. By adjusting the oil-and-fat to this range, the effect of maintaining juiciness can be further enhanced.

As another preferred aspect of the oil-and-fat to be kneaded into a processed food of the present invention, the total amount of lauric acid and myristic acid is preferably 40 to 70 mass%. More preferably, the upper limit is 68 mass% or less, or 66 mass% or less. More preferably, the lower limit is 45 mass% or more, 50 mass% or more, or 55 mass% or more. By adjusting the oil-and-fat to this range, the effect of maintaining juiciness can be further enhanced.

As a preferred aspect of the oil-and-fat to be kneaded into a processed food of the present invention, it is preferable to use one or more oils-and-fats selected from the group of palm oil and processed oils-and-fats obtained by fractionating, hydrogenating, or transesterifying palm oil. When two or more oils-and-fats are used, the above-described oils-and-fats may be appropriately mixed and used as long as the above-described configuration is satisfied. More preferably, palm olein obtained by fractionating palm oil, or palm medium-melting-point oil having an IV of 30 to 55 obtained by fractionating palm olein is used. Further preferably, palm medium-melting-point oil having an IV of 35 to 55 is used. When the oil-and-fat is adjusted to this range, the workability is more excellent, and the effect of maintaining juiciness can be further enhanced.

The oil-and-fat to be kneaded into a processed food of the present invention is preferably blended in an amount of 1 to 40 mass% into a dough of a processed food. More preferably, the upper limit is 38 mass% or less, or 35 mass% or less. More preferably, the lower limit is 2 mass% or more, or 5 mass% or more. When this range is appropriate, this effect can be maximized.

### (Other raw materials)

Known materials and food additives can be used depending on the type of the processed food according to the present invention. For example, vegetable, tallow such as lard, vegetable oil, starch, seasoning (salt, pepper, sugar, soy sauce or the like), processed starch, egg yolk, egg white, emulsifiers, spice, flavors, and other known additives can be appropriately used as long as the effect of the present invention is not hindered.

### (Usage)

A general example of the method for producing the processed food of the present invention is a method including a dough preparation step of kneading raw materials with a kneader such as a mixer, a robot coupe, or a silent cutter to prepare a dough, a molding step of molding the dough into an appropriate size and shape, and a heating step of heating the dough by steaming, frying, firing, or the like to heat-set the dough. The obtained processed food can be distributed in a refrigerated or frozen manner, and a consumer directly cooks the processed food by a microwave oven, stewing, frying, baking, steaming, or the like, or a retailer or a restaurant business operator indirectly cooks the processed food to provide the processed food.

The oil-and-fat to be kneaded into a processed food of the present invention is used in the above-mentioned dough preparation step, and it is preferable to chop the oil-and-fat into small pieces having a longest side of 1.5 cm or less before use. Examples of the chopping include cutting machines such as a mixer, a chopper, a robot coupe, and a silent cutter. The shape of the small pieces is not particularly limited as long as the longest side is 1.5 cm or less. Specific examples thereof include a columnar shape, a cubic shape, a circular shape, a semicircular shape, a polygonal pyramid, a polyhedron such as a polygonal column, and a slice shape. By blending and kneading the oil-and-fat chopped into small pieces into a dough, the oil-and-fat can be dispersed in the dough in an appropriate size, the dough can be molded, and the effect of the present invention can be maximized. On the other hand, when the SFC at 10°C is less than 1%, the oil-and-fat is not in a solid state even when stored in a refrigerator. Therefore, when the oil-and-fat in a liquid state is blended and kneaded into a dough, the dough becomes soft, and moldability may be poor. Alternatively, the oil-and-fat cannot be chopped into small pieces, making it difficult to knead the oil-and-fat into a dough, and it may be difficult to obtain juiciness immediately after heating or after heating and leaving to cool. It is desirable that the oil-and-fat be stored in a refrigerator (2°C to 10°C) until immediately before the dough preparation step. The temperature of the dough preparation step is desirably 10°C or lower. By satisfying these conditions, the oil-and-fat can be uniformly present in the form of small pieces having a longest side of 1.0 cm or less in the dough after the dough preparation step, and the effect of the present invention can be sufficiently exhibited. Furthermore, when the oil-and-fat is not visually confirmed in a size of about 1 to 5 mm, the effect of the present invention can be maximized if the oil-and-fat is in a state of being uniformly kneaded. On the other hand, if the dough after the dough preparation step is present in the form of a block having a longest side of more than 1.5 cm, or if the oil-and-fat is present unevenly, the oil-and-fat or the like easily flows out as a drip during cooking such as heating, and it is difficult to obtain juiciness at the time of eating immediately after heating or after heating and leaving to cool.

When the oil-and-fat to be kneaded into a processed food of the present invention is blended in a processed food containing livestock meat and/or a vegetable protein material, workability is excellent in the production of the processed food, and juiciness can be maintained immediately after heating and after heating and leaving to cool. In the case of a meatless food into which only a vegetable protein material is blended without including livestock meat, the effect of the present invention is particularly exhibited.

The present invention can also be regarded as a method for maintaining a flavor of a processed food containing livestock meat and/or a vegetable protein material. Specifically, when an oil-and-fat to be kneaded into a processed food satisfying all of requirements (A) to (D) below is used for a processed food containing livestock meat and/or a vegetable protein material, a processed food having excellent workability and maintaining juiciness can be obtained.
(A) A solid fat content (SFC) at 10°C is 10% or more.
(B) An SFC when held at 20°C for 30 minutes is 10% or less.
(C) A ratio of a saturated fatty acid content/an unsaturated fatty acid content in constituent fatty acids is 0.1 to 12.
(D) The oil-and-fat is a pure vegetable oil-and-fat.

The oil-and-fat to be kneaded into a processed food of the present invention can also be regarded as a flavor maintaining agent for maintaining a flavor of a processed food. Specifically, when an oil-and-fat to be kneaded into a processed food satisfying all of requirements (A) to (D) below is used as a flavor maintaining agent for a processed food containing livestock meat and/or a vegetable protein material, a processed food having excellent workability and maintaining juiciness can be obtained.
(A) A solid fat content (SFC) at 10°C is 10% or more.
(B) An SFC when held at 20°C for 30 minutes is 10% or less.
(C) A ratio of a saturated fatty acid content/an unsaturated fatty acid content in constituent fatty acids is 0.1 to 12.
(D) The oil-and-fat is a pure vegetable oil-and-fat.

### (Examples)

Hereinafter, the present invention will be described in more detail. It is noted that the terms "part" and "%" in the text are on a mass basis unless otherwise stated.

### (Measurement of constituent fatty acids)

The constituent fatty acids were measured in accordance with AOCS Official Method Ce 1h-05.

### (Measurement of SFC at 10°C)

The measurement of the SFC at 10°C was performed according to the method of IUPAC. 2 150(a) Solid Content Determination In Fats By NMR. That is, each oil-and-fat was held in an environment at 80°C for 30 minutes, held in an environment at 60°C for 30 minutes to completely melt each oil-and-fat, and then held in an environment at 0°C for 60 minutes to solidify each oil-and-fat. Thereafter, the solid fat content after being held in an environment at 10°C for 30 minutes was measured by an NMR ("minispec mq20" manufactured by Bruker Corporation).

### (Measurement of SFC after held at 20°C for 30 minutes)

The measurement of the SFC when held at 20°C for 30 minutes conforms to the method of IUPAC. 2 150(a) Solid Content Determination In Fats By NMR. That is, each oil-and-fat was placed in an environment at 80°C for 30 minutes and held in an environment at 60°C for 30 minutes to completely melt each oil-and-fat, and then the SFC was measured every 10 minutes while each oil-and-fat was held in an environment at 20°C.

### (Preparation of oils-and-fats to be studied)

The following fats-and-oils were used as fats-and-oils to be studied. All the fats-and-oils used were manufactured by Fuji Oil Co., Ltd.

In Oil-and-Fat Comparative Example 1, rapeseed oil was used. In Oil-and-Fat Example 1, coconut oil completely melted and then subjected to rapid cooling and kneading treatment with a combinator was used. In Oil-and-Fat Example 2, palm kernel oil completely melted and then subjected to rapid cooling and kneading treatment with a combinator was used. In Oil-and-Fat Example 3, 60 parts of rapeseed oil and 40 parts of palm medium-melting-point oil 1 (IV: 46) completely melted, mixed, and subjected to rapid cooling and kneading treatment with a combinator was used. In Oil-and-Fat Example 4, 40 parts of rapeseed oil and 40 parts of palm medium-melting-point oil 1 completely melted, mixed, and subjected to rapid cooling and kneading treatment with a combinator was used. In Oil-and-Fat Example 5, 20 parts of rapeseed oil and 80 parts of palm medium-melting-point oil 1 completely melted, mixed, and subjected to rapid cooling and kneading treatment with a combinator was used. In Oil-and-Fat Example 6, palm olein subjected to rapid cooling and kneading treatment with a combinator was used. In Oil-and-Fat Example 7, palm medium-melting-point oil 1 subjected to rapid cooling and kneading treatment with a combinator was used. In Oil-and-Fat Example 8, 98 parts of palm medium-melting-point oil 1 and 2 parts of palm stearin completely melted, mixed, and subjected to rapid cooling and kneading treatment with a combinator was used. In Oil-and-Fat Example 9, 94 parts of palm medium-melting-point oil 1 and 6 parts of palm stearin completely melted, mixed, and subjected to rapid cooling and kneading treatment with a combinator was used. In Oil-and-Fat Example 10, 92 parts of palm medium-melting-point oil 1 and 8 parts of palm stearin completely melted, mixed, and subjected to rapid cooling and kneading treatment with a combinator was used. In Oil-and-Fat Example 11, palm medium-melting-point oil 2 (IV: 34) completely melted, mixed, and subjected to rapid cooling and kneading treatment with a combinator was used. In Oil-and-Fat Comparative Example 2, palm stearin subjected to a rapid cooling and kneading treatment with a combinator was used. In Oil-and-Fat Example 12, Melano NEW.SS-7 was used.

The SFC at 10°C, the SFC when held at 20°C for 30 minutes, the content ratio of saturated fatty acids/unsaturated fatty acids, the contents of various fatty acids, and the IV of each oil-and-fat are shown in Tables 1-1 and 1-2.

**[Table 1-1]**

| [%] | 10°C SFC [%] | SFC when held at 20°C for 30 min [%] | Content ratio of saturated fatty acids/unsaturated fatty acids | IV |
|---|---|---|---|---|
| Oil-and-Fat Comparative Example 1 | 0.0 | 0.0 | 0.07 | 117 |
| Oil-and-Fat Example 1 | 81.7 | 0.2 | 10.90 | 9 |
| Oil-and-Fat Example 2 | 70.9 | 0.4 | 4.28 | 18 |
| Oil-and-Fat Example 3 | 18.4 | 0.2 | 0.35 | 88 |
| Oil-and-Fat Example 4 | 33.7 | 0.0 | 0.55 | 74 |
| Oil-and-Fat Example 5 | 51.0 | 0.1 | 0.83 | 60 |
| Oil-and-Fat Example 6 | 35.3 | 0.0 | 0.84 | 58 |
| Oil-and-Fat Example 7 | 71.1 | 0.0 | 1.23 | 46 |
| Oil-and-Fat Example 8 | 70.0 | 0.1 | 1.24 | 45 |
| Oil-and-Fat Example 9 | 71.3 | 2.7 | 1.27 | 45 |
| Oil-and-Fat Example 10 | 71.8 | 8.2 | 1.29 | 44 |
| Oil-and-Fat Example 11 | 92.3 | 0.3 | 1.71 | 34 |
| Oil-and-Fat Comparative Example 2 | 84.6 | 64.7 | 2.45 | 31 |
| Oil-and-Fat Example 12 | 88.2 | 8.2 | 1.70 | 34 |

**[Table 1-2]**

| [%] | C12 | C14 | C16 | C18 | Total of saturated fatty acids | C12 + C14 + C16 + C18 | C12 + C16 + C18 | C16 + C18 | Total of unsaturated fatty acids |
|---|---|---|---|---|---|---|---|---|---|
| Oil-and-Fat Comparative Example 1 | 0.0 | 0.0 | 3.9 | 1.6 | 6.4 | 5.5 | 5.5 | 5.5 | 93.6 |
| Oil-and-Fat Example 1 | 47.5 | 19.3 | 9.6 | 4.0 | 91.6 | 80.4 | 61.1 | 13.6 | 8.4 |
| Oil-and-Fat Example 2 | 47.7 | 16.4 | 8.7 | 2.3 | 81.1 | 75.2 | 58.7 | 11.0 | 18.9 |
| Oil-and-Fat Example 3 | 0.0 | 0.4 | 22.1 | 2.7 | 25.9 | 25.2 | 24.8 | 24.8 | 74.1 |
| Oil-and-Fat Example 4 | 0.1 | 0.6 | 31.2 | 3.2 | 35.6 | 35.1 | 34.5 | 34.5 | 64.4 |
| Oil-and-Fat Example 5 | 0.1 | 0.8 | 40.3 | 3.8 | 45.3 | 45.0 | 44.2 | 44.1 | 54.7 |
| Oil-and-Fat Example 6 | 0.1 | 1.0 | 40.2 | 4.1 | 45.7 | 45.4 | 44.4 | 44.3 | 54.3 |
| Oil-and-Fat Example 7 | 0.1 | 1.0 | 49.4 | 4.3 | 55.1 | 54.9 | 53.9 | 53.8 | 44.9 |
| Oil-and-Fat Example 8 | 0.1 | 1.0 | 49.7 | 4.3 | 55.4 | 55.2 | 54.2 | 54.1 | 44.6 |
| Oil-and-Fat Example 9 | 0.1 | 1.0 | 50.3 | 4.4 | 56.0 | 55.8 | 54.8 | 54.7 | 44.0 |
| Oil-and-Fat Example 10 | 0.1 | 1.0 | 50.6 | 4.4 | 56.3 | 56.1 | 55.1 | 55.0 | 43.7 |
| Oil-and-Fat Example 11 | 0.0 | 0.9 | 56.4 | 5.7 | 63.1 | 63.0 | 62.1 | 62.1 | 36.9 |
| Oil-and-Fat Comparative Example 2 | 0.1 | 1.4 | 64.0 | 5.1 | 71.0 | 70.6 | 69.2 | 69.1 | 29.0 |
| Oil-and-Fat Example 12 | 0.0 | 0.4 | 31.3 | 30.7 | 63.0 | 62.5 | 62.1 | 62.1 | 37.0 |

C12 means lauric acid, C14 means myristic acid, C16 means palmitic acid, and C18 means stearic acid. The total of saturated fatty acids refers to the total of saturated fatty acids having 8 to 22 carbon atoms, and the total of unsaturated fatty acids refers to the total of unsaturated fatty acids having 18 carbon atoms. Both include a cis form and a trans form.

### <Study 1>

### (Preparation of meatless hamburg steak)

As a processed food containing only a vegetable protein material, a meatless hamburg steak having a formulation shown in Table 2 was prepared. Immediately before the preparation, Oil-and-Fat Examples 1 to 12 and Oil-and-Fat Comparative Example 2 were chopped into small pieces with a chopper. A meatless hamburg steak was prepared in the following manner. A Kenwood mixer (manufactured by AICOHSHA MFG. Co., Ltd. stirring speed: 140 rpm) was used. Granular soybean protein added with water and emulsion curd were put in the mixer and stirred for 1 minute. Each of oils-and-fats to be studied made into small pieces was added to the mixture, and the mixture was stirred for 1 minute. Seasoning was further added thereto, and the mixture was stirred for 3 minutes. Finely cut onions were added thereto, and the mixture was stirred for 1 minute. Then, dried breadcrumbs ("W Hatsuyuki" manufactured by Fuji Panko Kogyo Co., Ltd.) and pregelatinized starch ("Pinesoft B" manufactured by Matsutani Chemical Industry Co., Ltd.) were added thereto, and the mixture was stirred for 30 seconds. The stirred dough was molded into one lump (50 g). Heating by baking and steaming was performed in a convection oven at 200°C for 8 minutes (center temperature: 80°C) to obtain a meatless hamburg steak. The hamburg steak that had been heated by baking and steaming was frozen in a shock freezer. The oils-and fats to be studied which had been stored in a refrigerator for one week were used, and stored in the refrigerator until immediately before use. Since Oil-and-Fat Comparative Example 1 was liquid, the oil-and-fat could not be made into small pieces, and was added to the dough as it was.

As an emulsion card used for the meatless hamburg steak, one obtained by sequentially adding, to 40.9 parts of water, 9.1 parts of powdery soybean protein ("Fujipro FR" manufactured by Fuji Oil Co., Ltd.), 9.1 parts of rapeseed oil (manufactured by Fuji Oil Co., Ltd.), 9.1 parts of dried egg white ("dried egg white, K type" manufactured by Kewpie Egg Corporation), and 31.8 parts of granular soybean protein (obtained by adding 2.5 times as much water to "Apex 950" manufactured by Fuji Oil Co., Ltd.) in an emulsifier to emulsify the mixture was used ("Robot Coupe" manufactured by FMI Co., Ltd., stirring at 1500 rpm for 5 minutes).

**[Table 2]**

| | [mass%] |
|---|---|
| Oil-and-fat studied | 10 |
| Granular soybean protein | 8 |
| Water | 32 |
| Emulsion curd | 24 |
| Onion | 10.8 |
| Pregelatinized starch | 2 |
| Dried breadcrumbs | 5 |
| Dried egg white | 3 |
| Sugar | 2 |
| Salt | 0.5 |
| Seasoning | 2.7 |
| Total | 100 |

### (Evaluation method)

The evaluations were the workability evaluation and the sensory evaluation after heating and leaving to cool with respect to immediately after heating. Details are shown below.

### (Workability evaluation)

In the molding step, the operator confirmed the moldability of the meatless hamburg steak.

### (Sensory evaluation)

The frozen hamburg steak was thawed and heated by being warmed in a microwave oven (500 Watts, 2 min), and eaten at two points of time when the product temperature was about 50 to 60°C (immediately after heating) and when the product temperature was about 30 to 40°C (after heating and leaving to cool) after the product was left at room temperature for 30 minutes thereafter. The maintenance of juiciness of the hamburg steak after heating and leaving to cool was evaluated according to the following criteria as compared with immediately after heating. Sensory evaluation was performed by five skilled panelists, and one evaluated as 3 or more points by consultation was considered as having maintained juiciness and regarded as acceptable. The results are shown in Table 3.

### (Evaluation points of juiciness)

0 point: Juiciness is weak even immediately after heating, and juiciness after heating and leaving to cool is also considerably weak.
1 point: Compared to immediately after heating, juiciness after heating and leaving to cool is considerably weak.
2 points: Compared to immediately after heating, juiciness after heating and leaving to cool is felt weaker than 4 points, and dryness is felt.
3 points: Compared to immediately after heating, juiciness after heating and leaving to cool is equivalent to 4 points, and dryness is slightly felt.
4 points: Compared to immediately after heating, juiciness after heating and leaving to cool is slightly weaker than 5 points.
5 points: Compared to immediately after heating, equivalent juiciness is felt even after heating and leaving to cool.

**[Table 3]**

| | Oil-and-fat studied | Sensory evaluation |
|---|---|---|
| Comparative Example 1 | Oil-and-Fat Comparative Example 1 | 0 |
| Example 1 | Oil-and-Fat Example 1 | 5 |
| Example 2 | Oil-and-Fat Example 2 | 5 |
| Example 3 | Oil-and-Fat Example 3 | 3 |
| Example 4 | Oil-and-Fat Example 4 | 4 |
| Example 5 | Oil-and-Fat Example 5 | 5 |
| Example 6 | Oil-and-Fat Example 6 | 3 |
| Example 7 | Oil-and-Fat Example 7 | 5 |
| Example 8 | Oil-and-Fat Example 8 | 5 |
| Example 9 | Oil-and-Fat Example 9 | 4 |
| Example 10 | Oil-and-Fat Example 10 | 4 |
| Example 11 | Oil-and-Fat Example 11 | 5 |
| Comparative Example 2 | Oil-and-Fat Comparative Example 2 | 1 |
| Example 12 | Oil-and-Fat Example 12 | 4 |

Regarding workability, the moldability of the meatless hamburg steak of each of Examples 1 to 12 and Comparative Example 2 was confirmed by the operator at the time of molding, and all of them could be molded without any problem. On the other hand, the dough of Comparative Example 1 was sticky and flexible, so that it was difficult to mold the dough.

The oils-and-fats used in Examples maintained juiciness even when eaten after heating and leaving to cool. In particular, in Example 1, Example 2, Example 5, Example 7, Example 8, and Example 11, juiciness equivalent to that immediately after heating was maintained. On the other hand, in the oil-and-fat of Comparative Example 1, no juiciness was observed immediately after heating or after heating and leaving to cool. In Comparative Example 2, although juiciness was observed immediately after heating, the oil-and-fat was dry after heating and leaving to cool, the juiciness was considerably weak, and the juiciness was not maintained.

### <Study 2>

### (Preparation of livestock-meat-like hamburg steak)

As a livestock-meat-like processed food containing livestock meat, a livestock-meat-like hamburg steak having a formulation shown in Table 4 was prepared. Immediately before the preparation, the oils-and-fats 2, 4, 6 to 8, 11, and 13 were chopped into small pieces with a chopper. The preparation method was as follows. Minced chicken and each of the oils-and-fats to be studied made into small pieces were put in a Kenwood mixer (manufactured by AICOHSHAMFG. Co., Ltd., stirring speed 140 rpm) and stirred for 2 minutes. Seasoning was added thereto, and the mixture was stirred for 1 minute and a half. Granular soybean protein added with water was added thereto, and the mixture was stirred for 30 seconds. Finely cut onions were added thereto, and the mixture was stirred for 30 seconds. Then, dried breadcrumbs and starch were added thereto, and the mixture was stirred for 30 seconds. The dough after stirring was molded into one lump (55 g). Heating by baking and steaming was performed in a convection oven at 200°C for 8 minutes (center temperature: 80°C) to obtain a livestock-meat-like hamburg steak. The hamburg steak that had been heated by baking and steaming was frozen in a shock freezer. The oils-and-fats to be studied which had been stored in a refrigerator for one week were used, and stored in the refrigerator until immediately before use. Since an oil-and-fat 1 was liquid, the oil-and-fat 1 could not be made into small pieces, and was added to the dough as it was.

**[Table 4]**

| | [mass%] |
|---|---|
| Oil-and-fat studied | 10.3 |
| Minced chicken | 45.2 |
| Granular soybean protein | 2.6 |
| Water | 12.9 |
| Onion | 19.4 |
| Dried breadcrumbs | 6.5 |
| Starch | 2 |
| Seasoning | 1.1 |
| Total | 100 |

### (Evaluation method)

The evaluation method followed that of Study 1, and the results are shown in Table 5. The number of panelists was 6.

**[Table 5]**

| | Oil-and-fat studied | Sensory evaluation |
|---|---|---|
| Comparative Example 3 | Oil-and-Fat Comparative Example 1 | 0 |
| Example 13 | Oil-and-Fat Example 1 | 5 |
| Example 14 | Oil-and-Fat Example 3 | 3 |
| Example 15 | Oil-and-Fat Example 5 | 5 |
| Example 16 | Oil-and-Fat Example 6 | 3 |
| Example 17 | Oil-and-Fat Example 7 | 5 |
| Example 18 | Oil-and-Fat Example 10 | 4 |
| Comparative Example 4 | Oil-and-Fat Comparative Example 2 | 1 |

Regarding workability, the moldability of the livestock-meat-like hamburg steak of each of Examples 13 to 18 and Comparative Example 4 was confirmed by the operator at the time of molding, and all of them could be molded without any problem. On the other hand, the dough of Comparative Example 3 was sticky and flexible, so that it was difficult to mold the dough.

In Examples 13 to 18, similarly to the results of examination of meatless hamburg steaks, juiciness was maintained even after heating and leaving to cool as compared with immediately after heating. In particular, in Examples 13, 15, and 17, juiciness equivalent to that immediately after heating was maintained. On the other hand, in Comparative Example 3, there was no juiciness immediately after heating or after heating and leaving to cool, and in Comparative Example 4, juiciness after heating and leaving to cool was weaker than that immediately after heating, and juiciness was not maintained.

## Claims

1. An oil-and-fat to be kneaded into a processed food satisfying all of requirements (A) to (D) below:
(A) a solid fat content (SFC) at 10°C is 10% or more;
(B) an SFC when held at 20°C for 30 minutes is 10% or less;
(C) a ratio of a saturated fatty acid content/an unsaturated fatty acid content in constituent fatty acids is 0.1 to 19; and
(D) the oil-and-fat is a pure vegetable oil-and-fat.

2. The oil-and-fat to be kneaded into a processed food according to claim 1, wherein a saturated fatty acid content in constituent fatty acids of the oil-and-fat to be kneaded into a processed food is 20 to 95 mass%.

3. The oil-and-fat to be kneaded into a processed food according to claim 1 or 2, wherein a total amount of unsaturated fatty acids in constituent fatty acids of the oil-and-fat to be kneaded into a processed food is 5 to 85 mass%.

4. The oil-and-fat to be kneaded into a processed food according to claim 1 or 2, wherein a total amount of lauric acid, myristic acid, palmitic acid, and stearic acid in constituent fatty acids of the oil-and-fat to be kneaded into a processed food is 20 to 90 mass%.

5. The oil-and-fat to be kneaded into a processed food according to claim 1 or 2, wherein a total amount of palmitic acid and stearic acid in constituent fatty acids of the oil-and-fat to be kneaded into a processed food is 15 to 65 mass%.

6. The oil-and-fat to be kneaded into a processed food according to claim 5, wherein a total amount of palmitic acid and stearic acid in constituent fatty acids of the oil-and-fat to be kneaded into a processed food is 40 to 60 mass%.

7. The oil-and-fat to be kneaded into a processed food according to claim 1 or 2, wherein an iodine value (IV) of the oil-and-fat to be kneaded into a processed food is 30 to 100.

8. The oil-and-fat to be kneaded into a processed food according to claim 7, wherein an iodine value (IV) of the oil-and-fat to be kneaded into a processed food is 33 to 60.

9. The oil-and-fat to be kneaded into a processed food according to claim 1 or 2, wherein the oil-and-fat to be kneaded into a processed food contains one or more oils-and-fats selected from the group of palm oil and processed oils-and-fats obtained by fractionating, hydrogenating, or transesterifying palm oil.

10. The oil-and-fat to be kneaded into a processed food according to claim 6, wherein the oil-and-fat to be kneaded into a processed food contains palm olein obtained by fractionating palm oil or palm medium-melting-point oil having an IV of 30 to 55 obtained by fractionating palm olein.

11. The oil-and-fat to be kneaded into a processed food according to claim 8, wherein the oil-and-fat to be kneaded into a processed food contains palm olein obtained by fractionating palm oil or palm medium-melting-point oil having an IV of 30 to 55 obtained by fractionating palm olein.

12. The oil-and-fat to be kneaded into a processed food according to claim 9, wherein the oil-and-fat to be kneaded into a processed food contains palm olein obtained by fractionating palm oil or palm medium-melting-point oil having an IV of 30 to 55 obtained by fractionating palm olein.

13. A processed food comprising: the oil-and-fat to be kneaded into a processed food according to claim 1; and livestock meat and/or a vegetable protein material, wherein a flavor of the processed food is maintained.

14. A processed food comprising: the oil-and-fat to be kneaded into a processed food according to claim 4; and livestock meat and/or a vegetable protein material, wherein a flavor of the processed food is maintained.

15. A processed food comprising: the oil-and-fat to be kneaded into a processed food according to claim 5; and livestock meat and/or a vegetable protein material, wherein a flavor of the processed food is maintained.

16. A processed food comprising: the oil-and-fat to be kneaded into a processed food according to claim 7; and livestock meat and/or a vegetable protein material, wherein a flavor of the processed food is maintained.

17. A processed food comprising: the oil-and-fat to be kneaded into a processed food according to claim 9; and livestock meat and/or a vegetable protein material, wherein a flavor of the processed food is maintained.

18. A method for producing a processed food, the method comprising: a dough preparation step of mixing the oil-and-fat to be kneaded into a processed food according to claim 1 with livestock meat and/or a vegetable protein material; a molding step of molding the mixture after mixing; and a heating step of heating the mixture after molding.

19. A method for producing a processed food, the method comprising: a dough preparation step of mixing the oil-and-fat to be kneaded into a processed food according to claim 5 with livestock meat and/or a vegetable protein material; a molding step of molding the mixture after mixing; and a heating step of heating the mixture after molding.

20. A method for producing a processed food, the method comprising: a dough preparation step of mixing the oil-and-fat to be kneaded into a processed food according to claim 9 with livestock meat and/or a vegetable protein material; a molding step of molding the mixture after mixing; and a heating step of heating the mixture after molding.

21. A method for maintaining a flavor of a processed food containing livestock meat and/or a vegetable protein material, wherein the oil-and-fat to be kneaded into a processed food according to claim 1 is contained.

22. A method for maintaining a flavor of a processed food containing livestock meat and/or a vegetable protein material, wherein the oil-and-fat to be kneaded into a processed food according to claim 5 is contained.

23. A method for maintaining a flavor of a processed food containing livestock meat and/or a vegetable protein material, wherein the oil-and-fat to be kneaded into a processed food according to claim 9 is contained.

24. A flavor maintaining agent for a processed food, wherein the oil-and-fat to be kneaded into a processed food according to claim 1 maintains a flavor of a processed food containing livestock meat and/or a vegetable protein material.

25. A flavor maintaining agent for a processed food, wherein the oil-and-fat to be kneaded into a processed food according to claim 4 maintains a flavor of a processed food containing livestock meat and/or a vegetable protein material.

26. A flavor maintaining agent for a processed food, wherein the oil-and-fat to be kneaded into a processed food according to claim 5 maintains a flavor of a processed food containing livestock meat and/or a vegetable protein material.

27. A flavor maintaining agent for a processed food, wherein the oil-and-fat to be kneaded into a processed food according to claim 7 maintains a flavor of a processed food containing livestock meat and/or a vegetable protein material.

28. A flavor maintaining agent for a processed food, wherein the oil-and-fat to be kneaded into a processed food according to claim 9 maintains a flavor of a processed food containing livestock meat and/or a vegetable protein material.
